# EUROPEAN PATENT APPLICATION

(11) **EP 4 741 475 A1**
(43) Date of publication of application: **13.05.2026**
(21) Application number: 25212664.4
(22) Date of filing: 31.10.2025
(51) Int. Cl.: C10G 35/06, C10G 45/64, C10G 47/00, C10G 50/00, C10G 69/08, C10G 69/12, C10G 69/14

(54) **METHOD FOR MANUFACTURING AVIATION FUEL**

(30) Priority: 11.11.2024 KR 20240159486
(71) Applicant: SK Innovation Co., Ltd., Seoul 03188 (KR)
(72) Inventor: LEE, Seung Woo, 34124 Daejeon (KR); LEE, Chang Q, 34124 Daejeon (KR); LEE, Ho Jeong, 34124 Daejeon (KR); LIM, Yun Ji, 34124 Daejeon (KR); KIM, Sun Young, 34124 Daejeon (KR); KIM, Eun Kyoung, 34124 Daejeon (KR); KIM, Yun Hwa, 34124 Daejeon (KR); PARK, Ki Heum, 34124 Daejeon (KR); LEE, Hye Soo, 34124 Daejeon (KR); Jang, Dong Seok, 34124 Daejeon (KR); CHO, Seung Hyun, 34124 Daejeon (KR)
(74) Representative: Lorenz Seidler Gossel Part. mbB

(57) **Abstract**

Proposed is a method for manufacturing aviation fuel, the method including the steps of preparing a feed, preparing an FT syncrude by subjecting the feed to a Fischer-Tropsch (FT) reaction, wherein the FT syncrude includes a first fraction and a kerosene fraction, the first fraction being a fraction with a boiling point range below that of kerosene, subjecting the first fraction to a reaction for increasing the boiling point, wherein the first fraction is converted to the second fraction, and the second fraction has a higher boiling point than the first fraction, and collecting aviation fuel from the kerosene fraction and the second fraction.

## Description

### BACKGROUND OF THE INVENTION

### Field of the Invention

The present disclosure relates to a method for manufacturing aviation fuel.

### Description of the Related Art

Synthetic fuel (or synfuel) is generally defined as a hydrocarbon produced via a series of chemical reactions from synthesis gas, which is a mixture of carbon monoxide and hydrogen used for fuel synthesis, and is distinguished from fuel obtained by distillation of crude oil. Among the catalytic reactions that synthesize liquid hydrocarbons from synthesis gas, the most representative example is the Fischer-Tropsch (FT) reaction.

Aviation fuel refers to the fuel used in aircraft engines. Aviation fuel is compositionally similar to kerosene, and is generally produced by blending kerosene fractions with various additives. Specifically, aviation fuel is produced by processing low volatility kerosene.

Sustainable aviation fuel (SAF) refers to aviation fuel that is made from sustainable and renewable feedstocks. These materials may be bio-derived, such as seaweed, plants, animals, and edible oils, or synthesized using carbon dioxide in the air, hydrogen derived from water, etc.

SAF can be used as a replacement for conventional aviation fuels in existing aircraft without requiring any modifications to the aircraft. SAF offers the advantage of reducing carbon emissions by up to 80% compared to conventional ones made from fossil resources such as petroleum and coal. SAF has attracted attention not only in terms of the depletion of existing fossil resources and rising crude oil prices, but also the perspective of mitigating global warming and reducing carbon dioxide emissions.

U.S. Patent Application Publication No. 2010/0108568 discloses a method for the production of jet fuel from synthetic crude produced by a Fischer-Tropsch process.

### SUMMARY OF THE INVENTION

According to one aspect of the present disclosure, there is provided a method for manufacturing aviation fuel, the method being capable of increasing the yield of aviation fuel production.

The method of the present disclosure can also be applied to the production technology for SAF, and thus can also contribute to mitigation of global warming through reduction of carbon emissions.

One aspect of the present disclosure is a method for manufacturing aviation fuel, the method including: preparing a feed; preparing an FT syncrude by subjecting the feed to a Fischer-Tropsch (FT) reaction, wherein the FT syncrude includes a first fraction and a kerosene fraction, the first fraction being a fraction with a boiling point range below that of kerosene; subjecting the first fraction to a reaction for increasing the boiling point, wherein the first fraction is converted to the second fraction, and the second fraction has a higher boiling point than the first fraction; and collecting aviation fuel from the kerosene fraction and the second fraction.

In one embodiment, the total content of the first fraction and the kerosene fraction in the FT syncrude is equal to or greater than 80 wt%, preferably equal to or greater than 85 wt%.

In one embodiment, the feed may be a syngas.

In one embodiment, the syngas may be derived from waste products, biomass, animal fats, vegetable oils, waste cooking oil, or a combination thereof, or may contain CO derived from captured carbon dioxide and green hydrogen.

In one embodiment, the FT reaction may be performed in the presence of a catalyst at a temperature of 180°C to 400°C, a pressure of 10 to 100 bar, and an H₂/CO molar ratio of 1 to 10.

In one embodiment, the catalyst may include Fe, Co, Ni, Ru, or a combination thereof.

In one embodiment, the catalyst may further include, as a promoter, Y, Ce, La, W, Mo, or a combination thereof.

In one embodiment, the first fraction may be a naphtha fraction.

In one embodiment, wherein an olefin content in the first fraction is equal to or greater than 40 wt%.

In one embodiment, the reaction for increasing the boiling point of the first fraction may be performed in the presence of a catalyst, at a temperature of 100°C to 300°C, a pressure of 1 to 100 bar, and a liquid hourly space velocity (LHSV) of 0.01 to 2.0 h⁻¹.

In one embodiment, the catalyst may be an acid catalyst.

In one embodiment, the acid catalyst may include a solid acid catalyst, a liquid acid catalyst, or a combination thereof, and wherein the solid acid catalyst may include zeolite, clay, solid phosphate, ion exchange resin, amorphous silica-alumina, mesoporous alumina, mesoporous silicate, or a combination thereof, and the liquid acid catalyst may include sulfuric acid, hydrofluoric acid, ionic liquid, or a combination thereof.

In one embodiment, the method may further include: producing a hydroprocessing reaction product by subjecting at least a portion of the second fraction, at least a portion of the kerosene fraction, or a combination thereof, to a hydroprocessing reaction, wherein the collecting aviation fuel may include collecting aviation fuel from the hydroprocessing reaction product.

In one embodiment, the hydroprocessing reaction may include at least one of a hydroisomerization reaction and a hydrocracking reaction.

In one embodiment, the FT syncrude may further include a diesel+ fraction, and wherein the method may further include subjecting at least a portion of the diesel+ fraction to a hydroprocessing reaction.

In one embodiment, it is possible to achieve an increase in production efficiency of aviation fuel.

In one embodiment, it is possible to achieve an increase in production efficiency of SAF.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a schematic flowchart illustrating a method for manufacturing aviation fuel according to an embodiment; and
FIG. 2 is a view illustrating the stage-by-stage compositions of an FT syncrude oil according to an embodiment.

### DETAILED DESCRIPTION OF THE INVENTION

Hereinafter, the present disclosure will be described in detail with reference to the accompanying drawings.

One aspect of the present disclosure provides a method for manufacturing aviation fuel. In the present disclosure, aviation fuel may be used interchangeably with jet fuel. The method may include: preparing a feed; preparing an FT syncrude by subjecting the feed to a Fischer-Tropsch (FT) reaction, wherein the FT syncrude includes a first fraction and a kerosene fraction, the first fraction being a fraction with a boiling point range below that of kerosene, and the total content of the first fraction and the kerosene fraction in the FT syncrude being equal to or greater than 85 wt%; subjecting the first fraction to a reaction for increasing the boiling point, wherein the first fraction is converted to the second fraction, and the second fraction has a higher boiling point than the first; and collecting aviation fuel from the kerosene fraction and the second fraction.

The feed may be a syngas containing CO and H₂. In one example, the syngas may be derived from fossil fuels. Alternatively, the syngas may be derived from waste products, biomass, animal fats, vegetable oils, waste cooking oil, or a combination thereof. The composition of CO and H₂ in the syngas may vary depending on applications. In one embodiment, the volume ratio of CO to H₂ in the syngas may be 1:1 to 1:4.

In one embodiment, the aviation fuel may be sustainable aviation fuel (SAF). In this case, the syngas may contain hydrogen derived from, for example, water. Specifically, the hydrogen may be green hydrogen obtained by electrolysis of water using renewable energy. Here, the expression "renewable energy" refers to energy derived from renewable and sustainable resources that can be naturally replenished over time, such as sunlight, wind, rain, tides, waves, and geothermal heat. Additionally, the syngas may contain CO derived from captured carbon dioxide. The carbon dioxide may be captured from the atmosphere or from exhaust gases.

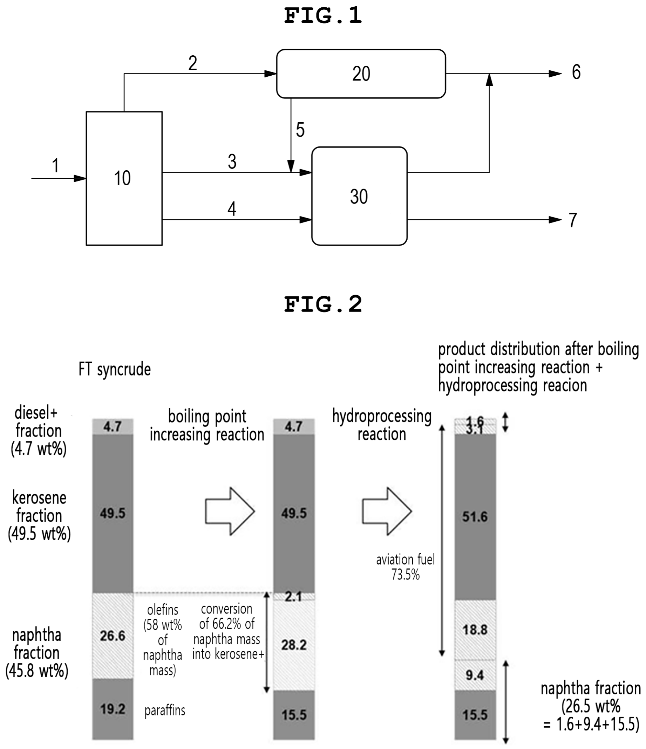

As illustrated in FIG. 1, an FT syncrude may be produced using the feed 1. To this end, the method of the present disclosure includes subjecting the feed to an FT reaction 10. In the present disclosure, the expression "FT syncrude" refers to a liquid hydrocarbon produced through an FT reaction. In relation to the syncrude, the expressions "naphtha fraction", "kerosene fraction", and "diesel+ fraction" are used in the disclosure. A naphtha fraction refers to a naphtha boiling range fraction or naphtha hydrocarbon range fraction, which may be used interchangeably. An analogous definition applies to both a kerosene fraction and a diesel+ fraction. In the present disclosure, the naphtha fraction contains hydrocarbons having 5 to 8 carbon atoms (C₅-C₈) and/or has a boiling point in the range of <150°C. The kerosene fraction contains hydrocarbons having 9 to 15 carbon atoms (C₉-C₁₅) and/or has a boiling point in the range of 150°-290°C. The diesel+ fraction contains hydrocarbons having 16 or more carbon atoms (C₁₆₊) and/or has a boiling point in the range of >290°C.

From the perspective of improving the production efficiency of aviation fuel, the FT syncrude of the present disclosure preferably includes not less than 85 wt% of fractions with a boiling point range at or below that of kerosene. Specifically, the FT syncrude includes a first fraction and a kerosene fraction, wherein the first fraction has a boiling point range below that of kerosene. In one embodiment, the first fraction may be a naphtha fraction. The total content of the first fraction and the kerosene fraction in the FT syncrude preferably is equal to or greater than 80 wt%, more preferably equal to or greater than 85 wt%. In one embodiment, the total content may be 85 to 100 wt%, specifically 85 to 97 wt%, and more specifically 85 to 95 wt%. An increase in the content of the diesel+ fraction in the FT syncrude entails higher catalyst and operating costs for hydrocracking of the diesel+ fraction. This hydrocracking reaction generates by-products in addition to an aviation fuel fraction. Therefore, the content of the diesel+ fraction in the FT syncrude may be minimized for improving aviation fuel yield.

Additionally, from the perspective of improving the efficiency of the reaction for increasing the boiling point of the first fraction, which will be described later, the first fraction may include a high content of olefins compared to paraffins. In some embodiments, the olefin content in the first fraction may be equal to or greater than 40 wt%. Specifically, the content may be 40 to 80 wt%, more specifically 40 to 70 wt%, and even more specifically 50 to 70 wt%. When the olefin content is less than the above range, a problem may arise in that the effect of increasing aviation fuel production via boiling point increasing of the first fraction is reduced. Meanwhile, in one embodiment, the first fraction may include a higher content of iso-paraffins than n-paraffins.

The FT reaction of the present disclosure is controlled to achieve the FT syncrude composition as described above. In one embodiment, the FT reaction may be performed in the presence of a catalyst at a temperature of 180°C to 400°C, a pressure of 10 to 100 bar, and an H₂/CO ratio of 1 to 10. Specifically, the temperature may be 190°C to 380°C, more specifically 200°C to 350°C. Additionally, the pressure may be 10 to 70 bar, more specifically 10 to 50 bar. Additionally, the H₂/CO ratio may be 1 to 7, more specifically 1 to 4.

The catalyst used in the FT reaction may include Fe, Co, Ni, Ru, or a combination thereof. Specifically, the catalyst may be Fe, Co, or a combination thereof. Additionally, the catalyst may be supported on a carrier. For example, the carrier may include alumina, magnesia, silica, titania, zirconia, or a combination thereof. Additionally, in one embodiment, the catalyst may further include a promoter. The promoter may include Y, Ce, La, W, Mo, or a combination thereof.

Meanwhile, an FT reaction product may include a tail gas and water in addition to the FT syncrude. The water may be separated from other products, recovered, and utilized for other purposes. The preparing of the FT syncrude may further include separating water from the FT reaction product. The separating step may be performed by a known oil-water separation means.

The FT reaction product from which water has been removed may be fractionally distilled to separate it into a tail gas and an FT syncrude. In one embodiment, the FT syncrude may be fractionally distilled to separate it into a first fraction 2, a kerosene fraction 3, and a diesel+ fraction 4. In another embodiment, the diesel+ fraction may be further separated into a diesel fraction (C₁₆-C₂₀) and a fraction having a boiling point range above that of diesel (C₂₁₊). In the present disclosure, the tail gas may include hydrocarbons (C₁-C₄) that are gaseous at room temperature, unreacted syngas, and carbon dioxide. The tail gas may be recovered and resubjected to an FT reaction.

As illustrated in FIG. 1, the first fraction in the FT syncrude is converted into a heavier second fraction 5 having a higher boiling point that meets the specifications required for aviation fuel. In other words, the method of the present disclosure includes subjecting the first fraction to a reaction 20 for increasing the boiling point, wherein the first fraction is converted to the second fraction, and the second fraction has a higher boiling point than the first fractionthe. In one embodiment, the second fraction may be a fraction having a boiling point range above that of kerosene (i.e., kerosene+ fraction). Specifically, the second fraction may be a kerosene boiling point range fraction.

The reaction for increasing the boiling point of the first fraction may include at least one of polymerization, alkylation, and aromatization of the first fraction. The polymerization refers to a polymerization reaction between olefins present in the first fraction. The polymerization may include dimerization, trimerization, and oligomerization.

The alkylation refers to a reaction between olefins and paraffins present in the naphtha fraction, and specifically, a reaction between olefins and iso-paraffins. The alkylation may include acid catalyzed alkylation.

As described above, the presence of olefins is essential in the reaction for increasing the boiling point of the first , and the first fraction having a higher olefin content relative to paraffins is converted into the second fraction with high efficiency.

In the reaction for increasing the boiling point of the first fraction, the polymerization, alkylation, and aromatization reactions may be performed simultaneously. Each of the polymerization, alkylation, and aromatization reactions may be performed under known reaction conditions. For example, the reaction for increasing the boiling point of the first fraction may be performed in the presence of a catalyst, at a temperature of 100°C to 300°C, a pressure of 1 to 100 bar, and a liquid hourly space velocity (LHSV) of 0.01 to 2.0 h⁻¹. Here, the LHSV refers to the volumetric flow rate of liquid fed per unit time per unit volume of catalyst in a reactor. In the reaction for increasing the boiling point of the first fraction, the liquid feed may include a first fraction. Specifically, the temperature may be 150°C to 280°C, more specifically 150°C to 250°C. Additionally, the pressure may be 10 to 50 bar, more specifically 30 to 50 bar. Additionally, the LHSV may be 0.05 to 1.0 h⁻¹, more specifically 0.1 to 1.0 h⁻¹.

The catalyst used in the reaction for increasing the boiling point of the first fraction may be an acid catalyst. Specifically, the acid catalyst may include a solid acid catalyst, a liquid acid catalyst, or a combination thereof.

The solid acid catalyst may include zeolite, clay, solid phosphate, ion exchange resin, amorphous silica-alumina, mesoporous alumina, mesoporous silicate, or the like. The zeolite may include a zeolite having a structure such as MFI, BEA, FAU, or MRE. Additionally, the clay may include montmorillonite, illite, vermiculite, smectite, kaolinite, or a mixture thereof. Additionally, the mesoporous silicate may include MCM, SBA, or the like. In some embodiments, the solid acid catalyst may be a metal-impregnated catalyst. Here, the metal may be Pt.

The liquid acid catalyst may include sulfuric acid, hydrofluoric acid, ionic liquid, or the like.

Through the reaction for increasing the boiling point of the first fraction, the conversion of the first fraction with low boiling point into the second fraction with high boiling point may be achieved. However, in actual processes, an unconverted fraction may remain during the reaction for increasing the boiling point of the first fraction. Accordingly, in one embodiment, the subjecting the first fraction to the reaction for increasing the boiling point may further include separating the second fraction and an unconverted first fraction. The unconverted first fraction may be recycled to the reaction for increasing the boiling point of the first fraction to contribute to an increased conversion rate. Alternatively, the unconverted first fraction may be recovered and subjected to subsequent processes to be used as naphtha 6, which is a feedstock for the production of known petrochemical products.

The second fraction obtained through the reaction for increasing the boiling point of the first fraction may be subjected to an upgrading step to meet the specifications required for aviation fuel. In the present disclosure, the expression "upgrading step" may be used interchangeably with "hydroprocessing reaction step". In other words, the method may include producing a hydroprocessing reaction product by subjecting at least a portion of the second fraction to a hydroprocessing reaction.

The upgrading step 30 is a step of productizing aviation fuel 7, and refers to a process of processing an oil fraction into a product that satisfies the physical properties of aviation fuel. The hydroprocessing reaction may include at least one of a hydroisomerization reaction and a hydrocracking reaction. The hydrocracking reaction refers to a reaction in which heavy fractions are converted into lighter fractions. The hydroisomerization reaction refers to a reaction in which wax components, such as n-paraffins, are isomerized into iso-paraffins to remove the wax components. The hydroisomerization reaction improves the freezing point of the oil fraction, thereby controlling the low-temperature performance of the product. A low freezing point of aviation fuel, which is predominantly used in aircraft operating at high altitudes, is one of the important requirements for aviation fuel.

The hydroprocessing reaction may be performed under known reaction conditions. For example, the hydroprocessing reaction may be performed in the presence of hydrogen and a catalyst at a reaction temperature of 200°C to 500°C, a reaction pressure of 20 to 300 kg/cm², an LHSV of 0.1 to 5.0 hr⁻¹, and an H₂/oil ratio of 100 to 3,000 Nm³/m³. Specifically, the reaction temperature may be 200°C to 450°C, more specifically 250°C to 410°C. Additionally, the reaction pressure may be 20 to 250 kg/cm², more specifically 30 to 200 kg/cm². Additionally, the LHSV may be 0.1 to 4.0 hr⁻¹, more specifically 0.1 to 3.0 hr⁻¹. Additionally, the H₂/oil ratio may be 150 to 2,500 Nm³/m³, more specifically 150 to 2,000 Nm³/m³.

Additionally, a catalyst usable in the hydroprocessing reaction process includes a carrier with acid sites selected from a molecular sieve, alumina, and silica-alumina, and at least one metal with hydrogenation functionality selected from Group 2, Group 6, Group 9, and Group 10 elements of the periodic table. In particular, the Group 9 and Group 10 (i.e., Group VIII) metals may be Co, Ni, Pt, or Pd, and the Group 6 (i.e., Group VIB) metals may be Mo or W. The carrier with acid sites includes a molecular sieve, alumina, silica-alumina, and the like. Of these, the molecular sieve refers to crystalline aluminosilicate (zeolite), SAPO, ALPO, and the like. The molecular sieve may be a medium-pore molecular sieve having a 10-membered oxygen ring, such as SAPO-11, SAPO-41, ZSM-11, ZSM-22, ZSM-23, ZSM-35, and ZSM-48, or a large-pore molecular sieve having a 12-membered oxygen ring.

Meanwhile, the kerosene fraction separated from the first fraction in the FT syncrude may also be processed through a hydroprocessing reaction to meet the specifications required for aviation fuel. In other words, the method may include producing a hydroprocessing reaction product by subjecting at least a portion of the kerosene fraction into a hydroprocessing reaction. The detailed description of the hydroprocessing reaction of the kerosene fraction may be substituted with the above description of the aforementioned hydroprocessing reaction. If necessary, the hydroprocessing reaction of the kerosene fraction may be performed simultaneously with or separately from the aforementioned hydroprocessing reaction of the second fraction.

In one embodiment, the diesel+ fraction in the FT syncrude, specifically the diesel fraction, may also be subjected to a hydroprocessing reaction. In other words, the method may further include subjecting at least a portion of the diesel+ fraction to a hydroprocessing reaction. The detailed description of the hydroprocessing reaction of the diesel+ fraction may also be substituted with the above description of the aforementioned hydroprocessing reaction. Additionally, since the boiling point of the diesel+ fraction is higher than that of aviation fuel, the hydroprocessing reaction includes a hydrocracking reaction.

The product of the hydroprocessing reaction may include a lighter fraction (e.g., naphtha) than aviation fuel as a by-product. The lighter fraction may also be recovered, similarly to the aforementioned unconverted first fraction, and subjected to subsequent processes to be used as a feedstock for the production of known petrochemical products.

The method of the present disclosure includes collecting aviation fuel from the kerosene fraction and the second fraction in the FT syncrude. When at least a portion of the kerosene fraction and/or at least a portion of the second fraction is subjected to a hydroprocessing reaction, the collecting step may further include collecting aviation fuel from a hydroprocessing reaction product. Similarly, in one embodiment, when the diesel+ fraction is subjected to a hydroprocessing reaction, the method may further include collecting aviation fuel from a hydroprocessing reaction product.

Through the collecting step, separation and recovery of aviation fuel with desired specifications are achieved. The separation and recovery may be performed by a known means such as fractional distillation. As illustrated in FIG. 1, in one embodiment, a fraction with a boiling point range below that of aviation fuel in the hydroprocessing reaction product may be recovered as naphtha together with the unconverted first fraction.

From the perspective of product stability, the collecting step may further include subjecting at least a portion of the hydroprocessing reaction product to a hydrofinishing (HDF) reaction. In the HDF reaction, hydrogen may be added to at least a portion of the hydroprocessing reaction product to saturate aromatic and olefin compounds in the product, thereby enhancing the stability of the aviation fuel product, particularly its resistance to oxidation, heat, and UV light. The HDF reaction may be performed under known reaction conditions.

For example, the HDF reaction may be performed in the presence of hydrogen and a catalyst. The catalyst used in the HDF reaction includes at least one metal with hydrogenation functionality selected from Group 6, Group 8, Group 9, Group 10, and Group 11 elements of the periodic table, and specifically, may include metal sulfides such as Ni-Mo, Co-Mo, and Ni-W or noble metals such as Pt and Pd.

Additionally, as a carrier, a large-surface area material such as silica, alumina, silica-alumina, titania, zirconia, or zeolite may be used, and specifically, alumina or silica-alumina may be used.

Through the method of the present disclosure as described above, it is possible to manufacture aviation fuel with a higher yield from the same amount of feed.

Additional description of the embodiments of the present disclosure will be provided below with reference to the specific experimental examples.

### Experimental Examples

### 1. Comparative Example 1. Manufacture of Aviation Fuel from FT Syncrude

### (1) Preparation of Co(10 wt%)/Al₂O₃ Catalyst

First, 50 g of an Al₂O₃ extrudate was prepared. 27.435 g of Co(NO₃)₂·6H₂O was dissolved in 100 g of distilled water to prepare a Co-solution. The Co-solution was poured onto the Al₂O₃ extrudate and then introduced into a rotary evaporator. The distilled water was evaporated in the rotary evaporator to produce a Co-impregnated wet extrudate (pink in color) (bath temperature: 80°C to 95°C, pressure: 100 to 200 mmHg, rotation speed: 40 to 100 rpm). The Co-impregnated wet extrudate was dried in an oven (80°C, overnight). Subsequently, the dried extrudate was subjected to a two-stage heat treatment: initially at 120°C for 12 hours, to remove residual moisture and promote structural stabilization, followed by a high-temperature calcination at 500°C for 5 hours, with a controlled heating rate: of 5°C/min. This thermal protocol facilitates the decomposition of organic binders, enhances pore development, and activates the catalytic surface.

### (2) Manufacture of Aviation Fuel from FT Syncrude-Derived Kerosene Fraction

1 g of a catalyst was mixed with 10 g of SiC and loaded into a fixed-bed reactor. As a pretreatment process, the reactor was heated to 420°C at a heating rate of 2°C/min while flowing hydrogen at a flow rate of 20 cc/min at atmospheric pressure, after which the catalyst metal was reduced for 12 hours to activate it, and cooled to room temperature. Hydrogen was replaced with reaction gas (syngas, H₂ 60% + CO 30% + Ar 10%) and the reaction pressure was adjusted to 20 Bar. The reaction was then initiated by increasing the temperature to 250°C at a heating rate of 2°C/min while flowing the reaction gas at a flow rate of 50 cc/min. The reaction was conducted for 100 hours, followed by cooling to room temperature. The reaction liquid product was collected by a hot trap and a cold trap.

The collected liquid product was analyzed by 2D-GC and separated into normal paraffins, iso-paraffins, olefins, naphthenes, and aromatics based on carbon number, followed by quantification. Specifically, Agilent 7890A equipment with two columns (DB-5, DB-Wax) and a modulator was used. The liquid product was dissolved at a concentration of 10% in methylene chloride and a 1 uL injection was used (split ratio 100:1). A GC oven was heated from 40°C to 250°C at a heating rate of 2°C/min.

The analysis results revealed that a prepared FT syncrude was composed of about 35 wt% of a naphtha fraction, about 50 wt% of a kerosene fraction, and about 15 wt% of a diesel+ fraction.

### (6a) Hydroprocessing reaction

The kerosene fraction was separated from the FT syncrude, followed by subjecting to a hydroprocessing reaction. Specifically, 15 g of the kerosene fraction and 1 g of a catalyst were injected into an autoclave-type reactor, after which hydrogen was supplied to the reactor until the hydrogen partial pressure reached 30 bar. The catalyst employed was Pt/EU-2 zeolite. Subsequently, the temperature of the reactor was raised to 200°C and, under stirring at 500 rpm, further raised to 320°C and held for 2 hours. The resultant product of the reaction exhibited a freezing point of -50°C, meeting the specifications for aviation fuel.

### (7a) Result

By the above-described method, aviation fuel was obtained with a yield of 50% of FT syncrude.

### 2. Example 1. Manufacture of Aviation Fuel from FT Syncrude

### (1) Preparation of Co(10 wt%)/Al₂O₃ Catalyst

The step was carried out as described in the context of Comparative Example 1.

### (2) Manufacture of Aviation Fuel from FT Syncrude-Derived Kerosene Fraction

The step was carried out as described in the context of Comparative Example 1.

### (3) Confirmation of Composition of Naphtha Fraction

Starting from the FT syncrude with a composition of about 35 wt% of a naphtha fraction, about 50 wt% of a kerosene fraction, and about 15 wt% of a diesel+ fraction prepared in step (2), the naphtha fraction was subsequently separated for compositional analysis. The composition of the naphtha fraction was determined by 2D-GC analysis, revealing that the paraffin content, the olefin content, and the aromatic content were 83.1 wt%, 15.3 wt%, and 1.6 wt%, respectively.

### (4) Preparation of the Catalyst for increasing the boiling point of naphtha fraction

A catalyst for increasing the boiling point of naphtha fraction was prepared through the following procedure.

7 g of MFI zeolite (SiO₂/Al₂O₃ = 30) and 3 g of pseudo-boehmite were mixed in a roller for at least 12 hours. A 1 M nitric acid (HNO₃) solution was prepared and added to the mixture of the zeolite and pseudo-boehmite, and the mixture was stirred to form a composite support paste. The paste was extruded using extrusion equipment, and the extrudate was cut into a size of 2 mm in diameter x 10 mm in length. The extrudate was then calcined in an air atmosphere at 120°C for 5 hours, followed by 550°C for 5 hours. The heating rate was 2°C/min.

### (5) Reaction for increasing the boiling point of Naphtha Fraction

Using the aforementioned catalyst and naphtha fraction, an experiment for increasing the boiling point of naphtha was conducted in a continuous fixed-bed reactor. After initially purging the continuous fixed-bed reactor loaded with the catalyst with nitrogen, the naphtha fraction was introduced (LHSV: 0.37/h, N₂: 40 bar, reaction temperature: 240 °C). The composition of the naphtha fraction before and after the reaction was analyzed, and the results are illustrated in Table 1 below.

**Table 1**

| 2D-GC | Before reaction (wt%) | After reaction (wt%) |
|---|---|---|
| C₄-C₈ (paraffins) | 83.1 | 78.8 |
| C₄-C₈ (olefins) | 15.3 | 3.2 |
| C₄-C₈ (aromatics) | 1.6 | 0.2 |
| C₉₊ | - | 17.8 |
| Total | 100 | 100 |

Referring to Table 1 above, it can be seen that the olefin content in the fraction decreased after the reaction, while the proportion of a C₉₊ fraction (kerosene:diesel+ = 85:15), which was not present before the reaction, increased.

### (6) Hydroprocessing reaction

The C₉₊ fraction (6.23 wt% (=35*17.8/100) based on the total syncrude) was mixed with 50 wt% of the kerosene fraction and 15 wt% of the diesel+ fraction of the previously prepared FT syncrude, followed by subjecting to a hydroprocessing reaction. The hydroprocessing reaction was carried out in the same manner as that performed in the preparation of Comparative Example 1. The content of each fraction of the reaction product was analyzed using an SIMDIS method according to ASTM D7500.

### (7) Result

After the hydroprocessing reaction, a fraction (Example 1) with a content of 65 wt% based on the total FT syncrude and a boiling point range within that of aviation fuel was obtained. The fraction exhibited a freezing point of equal to or less than -50°C, meeting the specifications for aviation fuel.

By the above-described method, aviation fuel was obtained with a yield increased by 15% compared to Comparative Example 1.

### 3. Example 2. Manufacture of Aviation Fuel from FT Syncrude with High-Olefin Content

### (1) Preparation of FT Syncrude

16.1 g of MFI zeolite (SiO₂/Al₂O₃ = 30) was prepared. The zeolite and 7.9 g of pseudo-boehmite were mixed in a roller for at least 12 hours to prepare a composite support mixture.

A cobalt nitrate and a nitrate of promoter metals were dissolved in a 1 M nitric acid (HNO₃) solution to prepare a catalyst precursor mixture solution. The prepared catalyst precursor mixture solution was then added to the composite support mixture of the zeolite and pseudo-boehmite, and the mixture was stirred to form a paste. The paste was extruded using extrusion equipment, and the extrudate was cut into a size of 2 mm in diameter x 10 mm in length. The extrudate was then calcined in an air atmosphere at 120°C for 5 hours, followed by 550°C for 5 hours. The heating rate was 2°C/min. The calcined extrudate was crushed and meshed to prepare a catalyst in the form of particles with a diameter ranging from 0.4 to 1.2 mm.

Except for using the catalyst, the same procedure as described in the section (2) of Example 1 was conducted to prepare an FT syncrude. The content of each fraction of the prepared FT syncrude was analyzed using an SIMDIS method. The results are illustrated in FIG. 2.

### (2) Reaction for increasing the boiling point of naphtha fraction

20 g of the previously obtained FT syncrude and 5 g of a catalyst were injected into an autoclave-type reactor, after which nitrogen was supplied to the reactor until the nitrogen partial pressure reached 20 bar. As the catalyst, the catalyst prepared in the section (4) of Example 1 was used. Subsequently, the temperature of the reactor was raised to 200°C and, under stirring at 300 rpm, further raised to 220°C and held for 6 hours. After collecting the resultant product, the content of each fraction was analyzed using an SIMDIS method. The results are illustrated in FIG. 2.

### (3) Hydroprocessing reaction

The product of the previous step was subjected to a hydroprocessing reaction. The hydroprocessing reaction was carried out using the same catalyst and conditions as in Example 1. After collecting the resultant product, the content of each fraction was analyzed using an SIMDIS method. The results are illustrated in Fig. 2.

Referring to FIG. 2, it can be seen that the FT reaction produced a naphtha fraction having an olefin content of equal to or greater than 40 wt%. Additionally, through the conversion reaction, 66.2 wt% of the naphtha fraction in the FT syncrude was converted into a kerosene+ fraction. Moreover, through the hydroprocessing reaction, a fraction (Example 2) with a content of 73.5 wt% based on the total FT syncrude and a boiling point range within that of aviation fuel was ultimately obtained.

The kerosene fraction in the FT syncrude was 49.5 wt%, and the aviation fuel fraction produced by the method of the present disclosure was 73.5 wt%. Therefore, compared to an aviation fuel fraction obtainable from the kerosene fraction alone, the method of the present disclosure can achieve a 24% increase in yield.

The amount of the aviation fuel fraction obtained relative to the FT syncrude in each experiment is summarized in Table 2 below.

**Table 2**

| Experiment | Comparative Example 1 | Example 1 | Example 2 |
|---|---|---|---|
| Aviation fuel fraction (wt%) | 50 | 65 | 73.5 |

As can be seen from Table 2 above, using the method of the present disclosure, it is expected that the production efficiency of aviation fuel and further SAF from the FT syncrude can be significantly increased.

## Claims

1. A method for manufacturing aviation fuel, the method comprising:
preparing a feed;
preparing an FT syncrude by subjecting the feed to a Fischer-Tropsch (FT) reaction, wherein the FT syncrude comprises a first fraction and a kerosene fraction, the first fraction being a fraction with a boiling point range below that of kerosene;
subjecting the first fraction to a reaction for increasing the boiling point, wherein the first fraction is converted to the second fraction, and the second fraction has a higher boiling point than the first fraction; and
collecting aviation fuel from the kerosene fraction and the second fraction.

2. The method of claim 1, wherein the total content of the first fraction and the kerosene fraction in the FT syncrude is equal to or greater than 85 wt%.

3. The method according to any one of the preceding claims, wherein the feed is a syngas.

4. The method of claim 3, wherein the syngas is derived from waste products, biomass, animal fats, vegetable oils, waste cooking oil, or a combination thereof, or contains CO derived from captured carbon dioxide and green hydrogen.

5. The method according to any one of the preceding claims, wherein the FT reaction is performed in the presence of a catalyst at a temperature of 180°C to 400°C, a pressure of 10 to 100 bar, and an H₂/CO molar ratio of 1 to 10.

6. The method of claim 5, wherein the catalyst comprises Co, Fe, Ni, Ru, or a combination thereof.

7. The method of claim 5 or 6, wherein the catalyst further comprises, as a promoter, Y, Ce, La, W, Mo, or a combination thereof.

8. The method according to any one of the preceding claims, wherein the first fraction is a naphtha fraction.

9. The method according to any one of the preceding claims, wherein an olefin content in the first fraction is equal to or greater than 40 wt%.

10. The method according to any one of the preceding claims, wherein the reaction for increasing the boiling point of the first fraction is performed in the presence of a catalyst, at a temperature of 100°C to 300°C, a pressure of 1 to 100 bar, and a liquid hourly space velocity (LHSV) of 0.01 to 2.0 h⁻¹.

11. The method of claim 10, wherein the catalyst is an acid catalyst.

12. The method of claim 11, wherein the acid catalyst comprises a solid acid catalyst, a liquid acid catalyst, or a combination thereof, and
wherein the solid acid catalyst comprises zeolite, clay, solid phosphate, ion exchange resin, amorphous silica-alumina, mesoporous alumina, mesoporous silicate, or a combination thereof, and
the liquid acid catalyst comprises sulfuric acid, hydrofluoric acid, ionic liquid, or a combination thereof.

13. The method according to any one of the preceding claims, further comprising:
producing a hydroprocessing reaction product by subjecting at least a portion of the second fraction, at least a portion of the kerosene fraction, or a combination thereof, to a hydroprocessing reaction,
wherein the collecting aviation fuel comprises collecting aviation fuel from the hydroprocessing reaction product.

14. The method of claim 13, wherein the hydroprocessing reaction comprises at least one of a hydroisomerization reaction and a hydrocracking reaction.

15. The method according to any one of the preceding claims, wherein the FT syncrude further comprises a diesel+ fraction, and
wherein the method further comprises subjecting at least a portion of the diesel+ fraction to a hydroprocessing reaction.
